# EUROPÄISCHE PATENTANMELDUNG

(11) **EP 4 763 712 A1**
(43) Veröffentlichungstag der Anmeldung: **24.06.2026**
(21) Anmeldenummer: 24221111.8
(22) Anmeldetag: 18.12.2024
(51) Int. Cl.: B64D 45/06, B64C 1/06, B64C 1/12, B64C 1/14

(54) **SCHUTZ FÜR EINEN FLUGZEUGRUMPF**

(71) Anmelder: AIRBUS Operations GmbH, 21129 Hamburg (DE)
(72) Erfinder: BENTHIEN, Hermann, 21129 Hamburg (DE); SIEMANN, Martin, 21129 Hamburg (DE)
(74) Vertreter: LKGLOBAL Partnerschaftsgesellschaft mbB

(57) **Zusammenfassung**

Die vorliegende Erfindung befasst sich mit dem Schutz für einen Flugzeugrumpf. Um eine Schutzmaßnahme zur Verfügung zu stellen, die ein möglichst geringes Gewicht hat und sich gut in den Rumpf integrieren lässt, ist ein Schutzeinsatz (10) für einen Heckbereich eines Flugzeugs vorgesehen. Der Schutzeinsatz weist ein Schutzpanel (12), einen das Schutzpanel stützenden Absorptionskörper (14) und eine den Absorptionskörper haltende Kraftübertragungsvorrichtung (16) auf. Das Schutzpanel ist für einen druckbelasteten Schleifkontakt mit einer Lande-/Startbahn bei einem Heckaufprall ausgebildet. Das Schutzpanel überträgt eine bei dem Heckaufprall einwirkende Druckkraft an den Absorptionskörper. Der Absorptionskörper ist zur Absorption der Druckkraft kraftdämpfend ausgeführt, wobei ein Teil der Energie aufgrund der wirkenden Druckkraft absorbierbar in eine elastische und/oder plastische Verformung wenigstens eines Teil des Absorptionskörpers umwandelbar ist. Die Kraftübertragungsvorrichtung ist zum Halten des Schutzeinsatzes an einer Unterseite eines Heckbereichs eines Flugzeugs ausgebildet und eine weist Vielzahl von Befestigungsbereichen (18) auf.

## Beschreibung

### GEBIET DER ERFINDUNG

Die vorliegende Erfindung betrifft den Schutz für einen Flugzeugrumpf, zum Beispiel bei einem Tailstrike. Die vorliegende Erfindung befasst sich insbesondere mit einem Schutzeinsatz für einen Heckbereich eines Flugzeugs, mit einem Schutzsystem für einen Heckbereich eines Flugzeugs und mit einem Flugzeug.

### HINTERGRUND DER ERFINDUNG

Beim Starten oder Landen von Flugzeugen kann es zu einem unbeabsichtigten Berühren bzw. Kontakt des Hecks mit der Start-/Landebahn kommen, zum Beispiel wenn das Flugzeug einen zu großen Winkel im Verhältnis zu Start-/Landebahn hat. Der Kontakt mit der Oberfläche der Start-/Landebahn kann mit unterschiedlicher Krafteinwirkung auf den Heckbereich des Flugzeugrumpfs erfolgen. Dieser Kontakt wird auch als Heckaufprall oder Tailstrike bezeichnet. Um den Rumpf zu schützen, können Schutzmaßnahmen vorgesehen sein. Beispielsweise kann an der Rumpfunterseite ein Hecksporn vorgesehen sein. Der Hecksporn ist beispielsweise als Schleifsporn oder als kleines Spornrad ausgebildet. Zum Schutz können auch Verstärkungen der Struktur vorgesehen sein. Beispielsweise ist in der DE 19848122 A1 eine Schutzvorrichtung für ein Rumpfheck eines Flugzeuges beschrieben, bei der ein Verstärkungsgerüst die Last in das Rumpftragwerk einleitet. Die Schutzmaßnahmen gehen insbesondere bei kommerziellen Passagierflugzeugen in der Regel jedoch mit einem zusätzlichen Gewicht und/oder recht hohem konstruktivem Aufwand einher.

### ZUSAMMENFASSUNG DER ERFINDUNG

Eine Aufgabe der vorliegenden Erfindung besteht daher darin, eine Schutzmaßnahme zur Verfügung zu stellen, die ein möglichst geringes Gewicht hat und sich gut in den Rumpf integrieren lässt.

Diese Aufgabe wird durch den Gegenstand der unabhängigen Ansprüche gelöst. Weitere Beispiele sind in den abhängigen Ansprüchen angegeben. Die im folgenden beschriebenen Aspekte gelten auch für den Schutzeinsatz für einen Heckbereich eines Flugzeugs, für das Schutzsystem für einen Heckbereich eines Flugzeugs, für das Flugzeug und für das Verfahren zum Schutz eines Flugzeugrumpfes sowie für die Verwendung eines Schutzeinsatzes für einen Heckaufprall eines Flugzeugs.

Gemäß der Erfindung ist ein Schutzeinsatz für einen Heckbereich eines Flugzeugs vorgesehen. Der Schutzeinsatz weist ein Schutzpanel, einen das Schutzpanel stützenden Absorptionskörper und eine den Absorptionskörper haltende Kraftübertragungsvorrichtung auf. Das Schutzpanel ist für einen druckbelasteten Schleifkontakt mit einer Landebahn bei einem Heckaufprall ausgebildet. Das Schutzpanel überträgt eine bei dem Heckaufprall einwirkende Druckkraft an den Absorptionskörper. Der Absorptionskörper ist zur Absorption der Druckkraft kraftdämpfend ausgeführt, wobei ein Teil der Energie aufgrund der wirkenden Druckkraft absorbierbar in eine elastische und/oder plastische Verformung wenigstens eines Teils des Absorptionskörpers umwandelbar ist. Die Kraftübertragungsvorrichtung ist zum Halten des Schutzeinsatzes an einer Unterseite eines Heckbereichs eines Flugzeugs ausgebildet und weist eine Vielzahl von Befestigungsbereichen auf.

Ein Tailstrike-Bereich, der auswechselbar ist, ermöglicht einen schnellen und einfachen Austausch der von einem Tailstrike betroffenen Struktur. Ein Tailstrike-Bereich, der austauschbar ist, ermöglicht eine Integration des Bereichs des Tailstrikes, sodass dieser Bereich ohne flugzeugspezifische Toleranzen ausgetauscht werden kann.

Gemäß einem Aspekt ist ein neues Konstruktionsprinzip für eine stoßdämpfende Funktion in einem Standardrumpf zur Verfügung gestellt.

Das Rumpfpaneel kann zur Verstärkung formschlüssig eingesetzt sein.

Gemäß einem Aspekt wird die Kraft in einen Einsatz eingeleitet und dort durch Verformung des Einsatzes, bzw. dessen Materialstruktur teilweise absorbiert, um dann gedämpft und gleichmäßig verteilt weiter geleitet zu werden. Der Einsatz dient also zum einen der Einleitung und gleichmäßigen Weiterleitung der Kraft und zum anderen auch der Dämpfung.

Der Einsatz ist so ausgelegt, dass auch bei einem Aufsetzen des Hecks und einer Verformung weiterhin eine formschlüssige Verbindung gewährleistet ist. Die Integrität der formschlüssigen Kraftübertragung ist stets vorhanden.

In einem Beispiel ist der Einsatz formschlüssig in einem Rahmen bzw. einer Aufnahme gehalten.

In einem weiteren Beispiel ist die Aufnahme formschlüssig in einem Rahmen der Tragstruktur gehalten, zum Beispiel zwischen Spanten und Stringern.

In einem noch weiteren Beispiel sind sowohl der Einsatz als auch die Aufnahme formschlüssig gehalten.

Gemäß einem Aspekt ist vorgesehen, dass eine ungewollt auf den Heckbereich wirkende Kraft, zum Beispiel beim Aufsetzen des Hecks während der Landung, nicht direkt an die Struktur des Rumpfes weitergeleitet wird, sondern durch ein Dämpfungselement absorbiert wird, d.h. gedämpft weitergeleitet wird. Das Dämpfungselement ist beispielsweise als austauschbarer Schutzeinsatz ausgebildet und dient dazu, die recht punktuell auftretende Kraft zu absorbieren und in z.B. eine Fläche weiterzuleiten, um die Kraft dann über einen Rahmen in die Rumpfstruktur einzuleiten.

Der Schutzeinsatz kann zum Beispiel eine runde Form, eine ovale oder elliptische Form oder auch eine rechteckige Form haben.

Gemäß einem Beispiel umfasst der Absorptionskörper einen Absorptionseinsatz, der eine Materialstruktur mit einer Vielzahl von Hohlräumen aufweist. Durch elastische und/oder plastische Verformung der Materialstruktur ist wenigstens ein Teil der Energie aufgrund der wirkenden Druckkraft absorbierbar. Die Materialstruktur ist ausgebildet als wenigstens eins aus der Gruppe umfassend: Schaumstruktur, Gitterstruktur und schaumartigem Gewebe.

Gemäß einem Beispiel ist der Absorptionskörper kissenartig ausgebildet und weist eine Hülle auf, in der eine Füllung vorgesehen ist. Die Hülle ist an der Kraftübertragungsvorrichtung gehalten und bildet eine erste Seite, an der das Schutzpanel anliegt, und eine von der ersten Seite abgewandte zweite Seite. Die Füllung ist ausgelegt, eine durch das Schutzpanel auf der ersten Seite übertragende Druckkraft auf die zweite Seite der Hülle zu übertragen, so dass die Kraft über die zweite Seite der Hülle als Zugkraft an die Kraftübertragungsvorrichtung übertragbar ist.

Gemäß einem Beispiel ist die Füllung als Absorptionsfüllung ausgebildet und durch eine elastische und/oder plastische Verformung der Absorptionsfüllung ist wenigstens ein Teil der Energie aufgrund der wirkenden Druckkraft absorbierbar.

Gemäß einem Beispiel ist die Absorptionsfüllung als Absorptionseinsatz ausgebildet, der eine Materialstruktur mit einer Vielzahl von Hohlräumen aufweist. Durch eine elastische und/oder plastische Verformung der Materialstruktur ist wenigstens ein Teil der Energie aufgrund der wirkenden Druckkraft absorbierbar. Die Materialstruktur ist ausgebildet als Schaumstruktur, Gitterstruktur oder schaumartiges Gewebe, oder einer Kombination aus dieser Gruppe, zum Beispiel aus Schaumstruktur/Gitterstruktur, aus Schaumstruktur /schaumartiges Gewebe, aus Gitterstruktur/schaumartiges Gewebe oder aus Schaumstruktur/Gitterstruktur/schaumartiges Gewebe.

Gemäß einem Beispiel besteht das Schutzpanel aus einem Kompositwerkstoff, der eine Matrix und in der Matrix eingebettete Verstärkungsfasern aufweist, wobei wenigstens ein Teil der Verstärkungsfasern aus S-Glas besteht.

Gemäß einem Beispiel weist der Schutzeinsatz eine Wärmeisolierung auf, mit der ein Wärmeeintrag von dem außenliegenden Schutzpanel in Richtung eines Rumpfinnenbereichs verringert wird.

Gemäß der Erfindung ist auch ein Schutzsystem für einen Heckbereich eines Flugzeugs vorgesehen. Das Schutzsystem weist einen Schutzeinsatz nach einem der vorhergehenden Beispiele und einen Aufnahmerahmen auf. Der Aufnahmerahmen ist konfiguriert, den Schutzeinsatz aufzunehmen und die über den Schutzeinsatz auf den Aufnahmerahmen wirkenden Kräfte in eine Rumpfstruktur eines Flugzeugs einzuleiten. Der Aufnahmerahmen weist eine Aufnahme für den Schutzeinsatz auf, und eine Vielzahl von Verbindungspunkten zur Befestigung an Tragelementen der Rumpfstruktur.

Gemäß einem Beispiel ist der Schutzeinsatz bei montiertem Aufnahmerahmen öffenbar gehalten. Der Aufnahmerahmen ist ausgebildet, bei einem geöffneten oder demontierten Schutzeinsatz für Inspektions- Wartungs- und/oder Reparaturzwecke eine Zugangsöffnung zum Rumpfinneren zu bilden.

Gemäß einem Aspekt hat eine sogenannte Mannlochplatte eine Doppelfunktion. In einer ersten Funktion dient die Platte zum Verschließen einer Öffnung, um den Zugang zum Inneren des Rumpfs zu ermöglichen, indem eine Person durch die Öffnung passt. In einer zweiten Funktion dient die Platte dem Schutz vor Heckaufsetzern, sogenannten Tailstrikes.

Die Platte, auch als Einsatz bezeichnet, kann im Normalbetrieb, d.h. für Flug- und Bodenlastfälle, tragfähig sein und so konstruiert werden, dass sie bei einem Tailstrike eine vorteilhafte Lasteinleitung ermöglicht. Beispielsweise erfolgt die Lastübertragung vom Auftreffbereich des Heckaufsetzers in die umgebende Rumpfstruktur, sodass eventuell Schäden im Auftreffbereich des Tailstrikes auftreten, wobei der Auftreffbereich austauschbar sein kann.

Ein definierter Bereich für einen Heckaufprall wird als Teil der Mannlochplatte ausgebildet. Der Heckaufprallschutz erfolgt also in einem dafür vorgesehenen Bereich des Rumpfes. Dies ermöglicht die folgenden Eigenschaften und vermeidet eine flugzeugspezifische Reparaturlösung nach einem Heckaufprall.

Beispielsweise bleiben die Befestigungen des Schutzeinsatzes, d.h. der Mannlochverkleidung, auch nach einer (begrenzten) plastischen Verformung, z.B. durch einen Heckaufprall, funktionsfähig.

Beispielsweise erfüllen die Befestigungen der Mannlochverkleidung eine Dichtungsfunktion. Die Mannlochverkleidung kann optional eine Wärmedämmfunktion zum Schutz des Wasserstofftanks vor thermischen Einflüssen, z.B. durch einen Heckaufprall, umfassen.

Gemäß einem Beispiel ist der Aufnahmerahmen in einem Rumpfpanel vorgesehen, das als abnehmbares strukturelles Panel ausgebildet ist, um einen Ein- und Ausbau von größeren Komponenten umfassend Wasserstofftanks, Segmente von Wasserstofftanks und Systeme und Komponente von Systemen für Wasserstofftanks und Wasserstoffantrieb innerhalb des Rumpfs zu ermöglichen.

Gemäß der Erfindung ist auch ein Flugzeug vorgesehen. Das Flugzeug weist einen Flugzeugrumpf und an dem Flugzeugrumpf befestigte Flügel auf, sowie ein an dem Flugzeugrumpf befestigtes Leitwerk. Der Flugzeugrumpf weist einen Heckbereich auf. An einer Unterseite des Heckbereichs ist ein Schutzsystem nach einem der vorhergehenden Beispiele vorgesehen.

Außerdem sind auch ein Verfahren zum Schutz eines Flugzeugrumpfes und eine Verwendung eines Schutzeinsatzes für einen Heckaufprall eines Flugzeugs vorgesehen.

Gemäß einem Aspekt wird die Kraft in einen Einsatz eingeleitet und dort durch Verformung des Einsatzes, bzw. dessen Materialstruktur teilweise absorbiert, um dann gedämpft und gleichmäßig verteilt weiter geleitet zu werden. Der Einsatz dient also zum einen der Einleitung und gleichmäßigen Weiterleitung der Kraft und zum anderen auch der Dämpfung.

Gemäß einem Aspekt ist der Schutzeinsatz als Absorptionskissen ausgebildet, das durch zwei außenliegende Hüllflächen und eine Füllung gebildet ist, um die Aufprallkraft von der einen Hüllfläche über die Füllung an die andere Hüllfläche zu leiten. Die als Druckkraft auf die eine Hüllfläche wirkende Aufprallkraft wird über die Füllung in eine Kraft umgewandelt, die in der anderen Hüllfläche als Zugkraft wirkt. Über die andere Hüllfläche kann die Zugkraft gleichmäßig verteilt an einen Rahmen weitergeleitet werden.

Die zweite Seite der Hülle stellt im Aufprallfall eine zugbelastete Membran dar. Die auftretende Membranspannung wird an den Rahmen weitergeleitet.

Der Schutzeinsatz wird durch einen flexiblen Kern in einer Hülle mit einem Cover auf der Außenseite gebildet.

Es sei darauf hingewiesen, dass die Merkmale der Ausführungsbeispiele des Schutzeinsatzes für einen Heckbereich eines Flugzeugs auch für Ausführungsformen des Schutzsystems für einen Heckbereich eines Flugzeugs, des Flugzeugs und des Verfahrens zum Schutz eines Flugzeugrumpfes gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.
- **Fig. 1**: zeigt schematisch ein Beispiel eines Schutzeinsatzes für einen Heckbereich eines Flugzeugs.
- **Fig. 2**: zeigt schematisch ein weiteres Beispiel eines Schutzeinsatzes.
- **Fig. 3**: zeigt schematisch ein Beispiel eines Schutzsystems für einen Heckbereich eines Flugzeugs.
- **Fig. 4**: zeigt ein Beispiel des Schutzsystems an einem Flugzeugheck in einer Seitenansicht.
- **Fig. 5**: zeigt das Beispiel des Schutzsystems aus Fig. 3 in einem Vertikalschnitt durch das Flugzeugheck.
- **Fig. 6**: zeigt ein weiteres Beispiel des Schutzsystems an einem Flugzeugheck in einer Seitenansicht.
- **Fig. 7**: zeigt das Beispiel des Schutzsystems aus Fig. 5 in einem Vertikalschnitt durch das Flugzeugheck.
- **Fig. 8**: zeigt schematisch ein Beispiel eines Flugzeugs in einer Seitenansicht im Zusammenhang mit einer Start-/Landebahn.

### DETAILLIERTE BESCHREIBUNG VON AUSFÜHRUNGSFORMEN

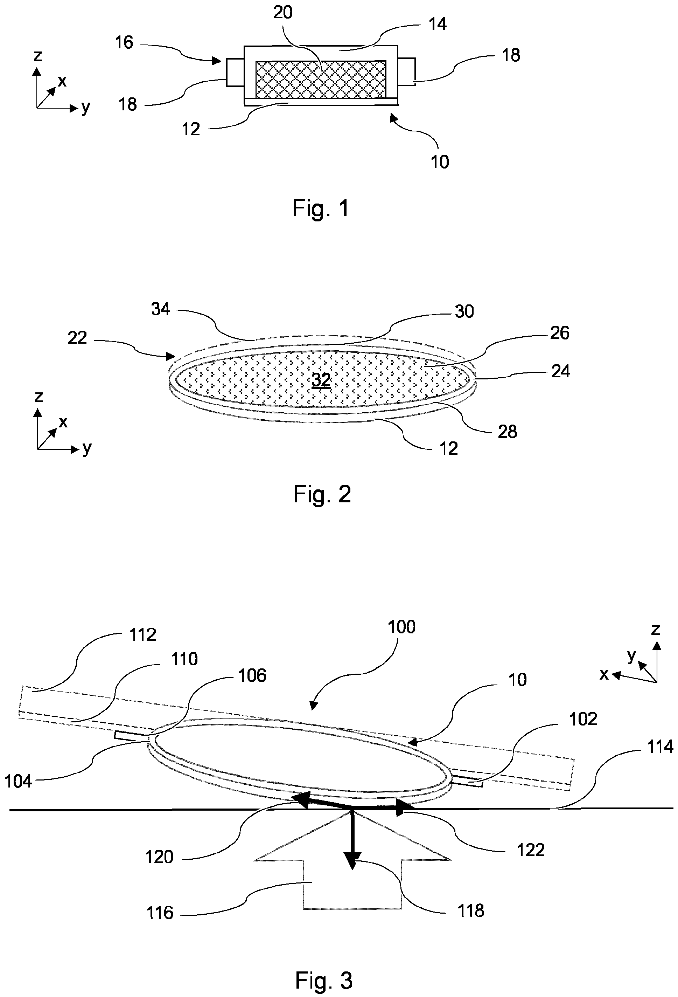

Fig. 1 zeigt schematisch ein Beispiel eines Schutzeinsatzes 10 für einen Heckbereich eines Flugzeugs. Der Schutzeinsatz 10 weist ein Schutzpanel 12, einen das Schutzpanel stützenden Absorptionskörper 14 und eine den Absorptionskörper haltende Kraftübertragungsvorrichtung 16 auf. Das Schutzpanel 12 ist für einen druckbelasteten Schleifkontakt mit einer Land-/Startbahn bei einem Heckaufprall ausgebildet. Das Schutzpanel 12 überträgt eine bei dem Heckaufprall einwirkende Druckkraft an den Absorptionskörper 14. Der Absorptionskörper 14 ist zur Absorption wenigstens eines Teils der Druckkraft kraftdämpfend ausgeführt. Ein Teil der Energie aufgrund der wirkenden Druckkraft ist absorbierend in eine elastische und/oder plastische Verformung wenigstens eines Teils des Absorptionskörpers 14 umwandelbar. Die Kraftübertragungsvorrichtung 16 ist zum Halten des Schutzeinsatzes 14 an einer Unterseite eines Heckbereichs eines Flugzeugs ausgebildet und weist eine Vielzahl von Befestigungsbereichen 18 auf.

In Fig. 1 ist der Schutzeinsatz beispielhaft in einem Querschnitt gezeigt, zum Beispiel analog zu einem Rumpfquerschnitt bei einer späteren Einbausituation.

Der Begriff "Schutzeinsatz" bezieht sich auf ein Bauteil, das als Schutzmaßnahme für Tailstrikes am Heck des Flugzeugs vorgesehen ist.

Der Begriff "Schutzpanel" bezieht sich auf einen Schutz des dahinterliegenden Körpers. Das Schutzpanel 12 ist ein plattenartiges Bauteil, das eine gekrümmte Kontur aufweisen kann, zum Beispiel einfach oder auch zweifach gekrümmt. Das Schutzpanel 12 ist in Bezug auf eine zu schützende Rumpfzelle außenliegend.

Der Schutzeinsatz 10 kann auch als Schutzpanel bezeichnet werden. Das oben genannte Schutzpanel 12 wäre dann ein Schutz oder ein Schutzaufsatz.

Der Begriff "Absorptionskörper" bezieht sich auf den Hauptbestandteil des Schutzeinsatzes 10 zur wenigstens teilweisen Absorption einer auftreffenden Kraft, zum Beispiel beim Aufsetzen des Hecks auf der Lande-/Startbahn. Der Absorptionskörper 14 kann auch als Absorptionskern oder Absorptionsstruktur bezeichnet werden.

Der Begriff "Kraftübertragungsvorrichtung" bezieht sich auf eine Haltevorrichtung, die zudem zur Übertragung des nicht absorbierten Kraftanteils vorgesehen ist.

Der Heckaufprall bezieht sich auf ein in der Regel ungewünschtes Aufprallen oder Aufschlagen des Hecks des Flugzeugs. Der Heckaufprall wird auch als Tailstrike bezeichnet.

Die bei einem Heckaufprall auf den Rumpf wirkende Kraft hat eine horizontale Komponente, die sich aus der Vorwärtsbewegung des Flugzeugs in Relation zur Landebahn ergibt. Gegen diese Vorwärtsbewegung wirkt die durch den Kontakt entstehende Reibkraft zwischen Schutzpanel 12 und Oberfläche der Landebahn. Die bei einem Heckaufprall auf den Rumpf wirkende Kraft hat außerdem auch eine vertikale Komponente, die sich aus der relativen Abwärtsbewegung des Hecks in Relation zur Start-/Landebahn ergibt. Die Abwärtsbewegung mit Tailstrike kann zum Beispiel auftreten, wenn das Flugzeug bei einem Landevorgang einen zu großen Winkel im Verhältnis zur Landebahn hat, oder beim Starten in einen zu großen Winkel im Verhältnis zur Startbahn gebracht wird.

Das Schutzpanel 12 ist für das Gleiten bzw. Reiben entlang der Start-/Landebahn ausgelegt. Das Schutzpanel 12 ist daher vorzugsweise mit einer reibfesten Oberfläche ausgebildet. Neben der Eignung, dass es zu möglichst wenig Materialabtrag kommt, ist das Schutzpanel 12 aber auch dafür ausgebildet, hohe Temperaturen auszuhalten, die aufgrund der starken Reibung entstehen können. Die starke Reibung ergibt sich beispielsweise aus einer recht hohen Geschwindigkeit und recht großem Druck.

Die Absorptionswirkung bedeutet, dass vertikale Verzögerungen bei einem Heckaufprall vermindert an die Struktur des Flugzeugs weitergegeben werden. Das wirkt sich insbesondere bei Wasserstofftanks an Bord des Flugzeugs günstig aus.

Der Schutzeinsatz 10 ist in einem Beispiel rund. In einem anderen Beispiel ist der Schutzeinsatz 10 oval oder elliptisch. In einem weiteren Beispiel ist der Schutzeinsatz 10 rechteckig oder polygonal.

Als Option ist in Fig. 1 gezeigt, dass der Absorptionskörper 14 einen Absorptionseinsatz 20 umfasst, der eine Materialstruktur mit einer Vielzahl von Hohlräumen aufweist. Durch elastische und/oder plastische Verformung der Materialstruktur ist wenigstens ein Teil der Energie aufgrund der wirkenden Druckkraft absorbierbar. Die Materialstruktur ist ausgebildet als wenigstens eins aus der Gruppe umfassend: Schaumstruktur, Gitterstruktur und schaumartiges Gewebe.

Der Begriff "Absorptionseinsatz" bezieht sich auf einen Teil des Absorptionskörpers 14, der zur Absorption vorgesehen ist. Der Absorptionseinsatz 20 kann in einer Haltestruktur eingesetzt sein oder als eigenständiger Körper ausgebildet sein.

Die Materialstruktur zeichnet sich durch eine Vielzahl von relativ kleinen Verbindungsbereichen aus. Diese Verbindungsbereiche lassen sich zum einen bis zu einem gewissen Maß elastisch verformen, und zum anderen lassen sich die Verbindungsbereiche auch plastisch verformen. Durch die hohe Zahl der Verbindungsbereiche kann eine relativ große, auf den Absorptionseinsatz 20 wirkende Druckkraft in Verformungsenergie umgewandelt, und damit absorbiert werden.

Die Materialstruktur lässt sich in einem Beispiel elastisch verformen und erlangt nach dem Wegfall der Kräfte wieder ihren Ausgangszustand. Die Materialstruktur lässt sich in einem anderen Beispiel plastisch verformen und erlangt nach dem Wegfall der Kräfte ihren Ausgangszustand nicht. Die Materialstruktur lässt sich in einem weiteren Beispiel elastisch und plastisch verformen und erlangt nach dem Wegfall der Kräfte ihren Ausgangszustand nicht vollständig.

Bei der elastischen und/oder plastischen Verformung der Materialstruktur kommt es zu einer Umwandlung der Aufprallenergie in Verformungsenergie. Das führt zu einer verminderten Weitergabe des Aufprallimpulses an die Rumpfstruktur.

Fig. 2 zeigt schematisch ein weiteres Beispiel des Schutzeinsatzes 10. Der Absorptionskörper 14 ist als eine Art Kissen 22 ausgebildet und weist eine Hülle 24 auf, in der eine Füllung 26 vorgesehen ist. Die Hülle ist an der Kraftübertragungsvorrichtung 16 gehalten (nicht gezeigt) und bildet eine erste Seite 28, an der das Schutzpanel anliegt, und eine von der ersten Seite abgewandte zweite Seite 30. Die Füllung 26 ist ausgelegt, eine durch das Schutzpanel 12 auf der ersten Seite 28 übertragende Druckkraft auf die zweite Seite 30 der Hülle 24 zu übertragen, so dass die Kraft über die zweite Seite 30 der Hülle 24 als Zugkraft an die Kraftübertragungsvorrichtung 16 übertragbar ist.

Der Begriff "kissenartig" bezieht sich auf eine Art Absorptionsfüllung 32 in einer die Füllung haltenden Hülle.

Der Begriff "Hülle" bezieht sich auf eine die Absorptionsfüllung 32 umgebende Struktur. Die Hülle kann als Membran oder auch als Netz ausgebildet sein. Die Hülle dient dazu, Kräfte aufzunehmen und abzuleiten.

Der Begriff "Füllung" bezieht sich auf den Einsatz oder Körper in der Hülle. Die Füllung kann eine selbstragende Struktur sein oder durch die Hülle gehalten sein.

Die Kissenform eignet sich besonders für den sphärischen Bereich der Unterseite des Rumpfs am Heck des Flugzeugs.

Als Option ist in Fig. 2 gezeigt, dass die Füllung 26 als Absorptionsfüllung 32 ausgebildet ist und durch eine elastische und/oder plastische Verformung der Absorptionsfüllung 32 wenigstens ein Teil der Energie aufgrund der wirkenden Druckkraft absorbierbar ist.

In einer Option ist die Absorptionsfüllung 32 als Absorptionseinsatz ausgebildet, der eine Materialstruktur mit einer Vielzahl von Hohlräumen aufweist. Durch eine elastische und/oder plastische Verformung der Materialstruktur kann wenigstens ein Teil der Energie aufgrund der wirkenden Druckkraft absorbiert werden. Die Materialstruktur ist ausgebildet als Schaumstruktur und/oder Gitterstruktur und/oder schaumartiges Gewebe.

Der Begriff "Absorptionsfüllung" bezieht sich auf eine Struktur, die bei einer auftreffenden Kraft, zum Beispiel bei einem Tailstrike, wenigstens einen Teil der Kraft absorbieret bzw. dämpft.

Die Ausbildung eines absorbierenden Kissens stellt ein fluidgestütztes Membrantragelement zur Verfügung, das eine auftreffende Kraft gedämpft weiterleitet. Zum Beispiel wird die Aufprallkraft gedämpft oder sogar verringert an das Tragwerk des Flugzeugs, d.h. die Rumpfstruktur, weitergeleitet.

Das Schutzpanel 12 übernimmt beispielsweise in einer Option neben dem Schutz hinsichtlich des Kontakts mit der Landebahn auch eine zumindest teilweise Verteilfunktion der Kraftableitung an das absorbierende Kissen. Das absorbierende Kissen absorbiert die Kraft und leitet sie flächig weiter über die Rückseite der Membran. Hier kann nur Zugkraft weitergeleitet werden. Dies erfolgt flächig in den Rahmen, in dem das Kissen gehalten ist. In einem Beispiel erfolgt die Kraftweiterleitung gleichmäßig in den Rahmen.

In einem Beispiel ist die Absorptionsfüllung 32 als Absorptionseinsatz ausgebildet, der eine Materialstruktur mit einer Vielzahl von Hohlräumen aufweist. Durch eine elastische und/oder plastische Verformung der Materialstruktur ist wenigstens ein Teil der Druckkraft absorbierbar. Die Materialstruktur ist ausgebildet als wenigstens aus der Gruppe umfassend: Schaumstruktur, Gitterstruktur und schaumartiges Gewebe.

In einer weiteren Option ist zusätzlich oder alternativ zur Absorptionsfüllung die zweite Seite der Hülle als Absorptionsfläche ausgebildet. Durch eine elastische und/oder plastische Verformung der Absorptionsfläche ist wenigstens ein Teil der Druckkraft absorbierbar.

Die Materialstruktur zeichnet sich durch eine Vielzahl von relativ kleinen Verbindungsbereichen aus. Diese Verbindungsbereiche lassen sich zum einen bis zu einem gewissen Maß elastisch verformen, und zum anderen lassen sich die Verbindungsbereiche auch plastisch verformen. Durch die hohe Zahl der Verbindungsbereiche kann eine relativ große, auf den Absorptionseinsatz wirkende Druckkraft in Verformungsenergie umgewandelt und damit absorbiert werden.

Die Materialstruktur lässt sich in einem Beispiel elastisch verformen und erlangt nach dem Wegfall der Kräfte wieder ihren Ausgangszustand.

Die Materialstruktur lässt sich in einem anderen Beispiel plastisch verformen und erlangt nach dem Wegfall der Kräfte ihren Ausgangszustand nicht.

Die Materialstruktur lässt sich in einem weiteren Beispiel elastisch und plastisch verformen und erlangt nach dem Wegfall der Kräfte ihren Ausgangszustand nicht vollständig.

Bei der elastischen und/oder plastischen Verformung der Materialstruktur kommt es zu einer Umwandlung der Aufprallenergie in Verformungsenergie. Das führt zu einer verminderten Weitergabe des Aufprallimpulses an die Rumpfstruktur.

In einer alternativen Variante ist der Absorptionskörper 14 von einer Fachwerk- oder Rippenstruktur gehalten. Die absorbierende Masse drückt zum Beispiel auf eine von einem Fachwerk gehaltene Fläche, von der die Kraft in das Fachwerk eingeleitet wird, das dann wiederum die Kraft an einen Rahmen gleichmäßig verteilt abgibt.

In einer weiteren alternativen Variante ist der Absorptionskörper 14 mit einer mehrdimensionalen Rippenstruktur ausgebildet, bei der Kräfte von einer Fläche an Rippen abgeleitet werden. Die Rippen sind beispielsweise als multi-hierarchisches Gitter ausgebildet: Kleine Rippen sind an größeren Rippen gehalten und diese wiederum an noch größeren. Die Rippen bilden eine Gitterstruktur. Durch Verformung, z.B. elastisch und/oder plastisch, kann eine Aufprallenergie zumindest teilweise in Verformungsenergie umgewandelt werden, d.h. zumindest teilweise absorbiert werden. Beispielsweise kann ein Teil der Kraft über eine Füllung absorbiert werden, ein anderer Teil kann über das Gitter absorbiert werden.

Die bei einem Tailstrike lokal auftretende Kraft wird auf die Rahmen- oder Ringstruktur verteilt, um von dort in den Rumpf eingeleitet zu werden.

In einer Option ist der Schutzeinsatz mit der Kraftübertragungsvorrichtung in einem Aufnahmerahmen und dieser wiederum in einer Rumpfstruktur abgedichtet gehalten und für eine Druckbeaufschlagung eines Rumpfinnenbereichs ausgelegt. In einem Beispiel ist der Heckbereich, in dem das Schutzsystem eingebaut ist, druckbeaufschlagt. In einem anderen Beispiel ist der Heckbereich, in dem das Schutzsystem eingebaut ist, nicht druckbeaufschlagt, sondern in Fahrtrichtung hinter einem Druckschott, das einen druckbeaufschlagten Bereich von einem nicht druckbeaufschlagten Bereich trennt.

Als weitere Option ist in Fig. 2 (sowie auch Fig. 3 und Figs. 4-7) gezeigt, dass der Absorptionskörper 14 in vertikaler Richtung eine bauchige Querschnittsform hat.

In einer Option ist vorgesehen, dass der Absorptionskörper 14 in horizontaler Richtung eine gerundete Form hat.

In einem Beispiel ist der Absorptionskörper bauchig. In horizontaler Richtung weist der Absorptionskörper eine gerundete Form auf.

In einem weiteren Beispiel ist der Absorptionskörper nicht bauchig, sondern steht als Kegelstumpf, Pyramidenstumpf oder Quaderstumpf ab. In horizontaler Richtung weist der Absorptionskörper eine gerundete Form auf.

In einem Beispiel ist der Absorptionskörper bauchig. In horizontaler Richtung weist der Absorptionskörper eine polygonale oder rechteckige Form auf.

In einem noch weiteren Beispiel steht der Absorptionskörper als Kegelstumpf, Pyramidenstumpf oder Quaderstumpf ab und weist in horizontaler Richtung eine polygonale oder rechteckige Form auf.

Der Begriff "bauchig" bezieht sich auf eine beidseitig konvexe, d.h. nach außen gewölbte Form. Auf der Außenseite wird so ein leicht vorstehender Bereich gebildet, der bei einem Tailstrike sicherstellt, dass die Kraft in den Schutzeinsatz 10 eingeleitet wird und die umgebenden Rumpfbereiche auch bei unterschiedlichen Flugmanövern nicht mit der Lande-/Startbahn in Berührung kommen können. Auf der Innenseite bietet die Form den Vorteil, dass von außen wirkende Druckkräfte in eine Zugspannung umgewandelt und so an einen Rahmen weitergeleitet werden können.

Der Begriff "gerundet" bezieht sich auf eine Form, die einen möglichst gleichmäßigen Krafteintrag ermöglicht, zum Beispiel ohne im Winkel aufeinandertreffende Seiten. Die gerundete Form ist zum Beispiel kreisrund, oval, elliptisch oder eiförmig oder abweichend davon abgerundet.

Der Absorptionskörper 14 ist zum Beispiel als sphärisches Kissen ausgebildet, zum Beispiel mit einem linsenförmigen Querschnitt.

Die vertikale Richtung bezieht sich auf eine spätere Einbausituation bzw. primäre Kraftwirkung der Aufprallkraft. Die vertikale Richtung verläuft zum Beispiel quer zum Schutzpanel. Die horizontale Richtung bezieht sich auf eine spätere Einbausituation bzw. primäre Kraftwirkung der Aufprallkraft. Die horizontale Richtung verläuft zum Beispiel parallel zum Schutzpanel 12.

Als nicht im Detail gezeigte Option ist vorgesehen, dass das Schutzpanel 12 aus einem Kompositwerkstoff besteht, der eine Matrix und in der Matrix eingebettete Verstärkungsfasern aufweist. Wenigstens ein Teil der Verstärkungsfasern besteht aus S-Glas.

Der Begriff S-Glas bezieht sich auf eine Glasfaserart, die sich durch eine sehr hohe Festigkeit, eine sehr hohe Steifheit und einen sehr hohen Schmelzpunkt auszeichnet. In der Regel weist S-Glas unter den kommerziell eingesetzten Glas-Verstärkungsfasern die höchsten Werte für Festigkeit, Steifheit und Schmelzpunkt auf. S-Glas Fasern werden sonst beispielsweise bei leichtgewichtigen Ballistik-Schutzstrukturen eingesetzt.

Beispielsweise sind die Verstärkungsfasern für hohe mechanische Anforderungen auch bei hohen Temperaturen ausgelegt.

Beispielsweise bestehen die Verstärkungsfasern aus Aluminiumsilikat-Glas mit Zusätzen von Magnesiumoxid.

Das Schutzpanel 12 zeichnet sich durch eine hohe Verschleißfestigkeit aus. Die Verschleißfestigkeit ist für einen großen Temperaturbereich ausgelegt, der sich zum Beispiel von -30° C bis zu 120° C oder mehr erstreckt. Die niedrigen Temperaturen sind zum Beispiel durch winterliche Bedingungen im Bereich der Lande- und Startbahnen bedingt, aber auch durch die niedrigen Temperaturen während des Flugbetriebs in den üblichen Reiseflughöhen, die das außenliegende Schutzpanel abkühlen können. Die hohen Temperaturen sind durch die bei der Reibung entstehende Hitze bedingt, aber bis zu einem gewissen Maß auch durch sommerliche Bedingungen und vor allem Sonneneinstrahlung im Bereich der Lande- und Startbahnen und dort auftretende hohe Oberflächentemperaturen.

Als weitere Option ist in Fig. 2 mit gestrichelter Linie gezeigt, dass der Schutzeinsatz 10 eine Wärmeisolierung 34 aufweisen kann, mit der ein Wärmeeintrag von dem außenliegenden Schutzpanel 12 in Richtung eines Rumpfinnenbereichs verringert wird.

Der Begriff "Wärmeeintrag" bezieht sich hier primär auf die durch einen Tailstrike an dem Schutzpanel erzeugte Wärme.

Der Begriff "Wärmeisolierung" bezieht sich auf eine Maßnahme, die eine Wärmeabgabe zum Inneren des Rumpfes verringert, wo zum Beispiel Wasserstofftanks angeordnet sein können. In einem Beispiel ist die Wärmeisolierung 34 mit einem geringeren Wärmedurchgangskoeffizient ausgebildet als die absorbierende Struktur. In einem anderen Beispiel weist die Wärmeisolierung 34 eine verringerte Wärmeabstrahlung auf. In einem weiteren Beispiel weist die Wärmeisolierung 34 eine gezielte Wärmeabfuhr zur Seite in die Rumpfkonstruktion auf. In einem noch weiteren Beispiel weist die Wärmeisolierung eine aktive Kühlung auf.

Beispielsweise ist die Wärmeisolierung 34 als Schicht in dem Schutzeinsatz 10 ausgebildet.

In einem anderen Beispiel ist die Wärmeisolierung 34 als Schicht auf der Innenseite des Schutzeinsatzes 10 aufgebracht.

In einer Option ist die Wärmeisolierung 34 mit der Rahmenkonstruktion verbunden, die den Schutzeinsatz 10 hält. Über zum Beispiel eine Ringverschraubung der Rahmenkonstruktion kann neben den Haltekräften auch die Wärme möglichst homogen eingeleitet werden.

In einem Beispiel ist der als Kissen ausgebildete Absorptionskörper 14 auf der Außenseite mit einer Metallwandung bzw. Metallhülle oder Metallmembran ausgebildet und auf der Innenseite mit einer wärmeisolierenden Wandung bzw. Hülle der Membran.

Die Außenseite ist die nach außen weisende Seite, die zum Beispiel von der Schutzschicht abgedeckt ist. Die Innenseite ist die in eingebautem Zustand zum Rumpfinneren weisende Seite, die zum Beispiel von einer zusätzlichen Wärmeisolierung abgedeckt ist.

In einem Beispiel ist die Wärmeisolierung durch den Absorptionskörper selbst ausgebildet.

In einem anderen Beispiel ist die Wärmeisolierung integriert mit dem Absorptionskörper ausgebildet.

In einem weiteren Beispiel ist die Wärmeisolierung als separates Bauteil in Ergänzung zu dem Absorptionskörper ausgebildet.

Fig. 3 zeigt schematisch ein Beispiel eines Schutzsystems 100 für einen Heckbereich eines Flugzeugs. Das Schutzsystem 100 weist ein Beispiel des Schutzeinsatzes 10 nach einem der vorhergehenden Beispiele auf sowie einen Aufnahmerahmen 102. Der Aufnahmerahmen 102 ist konfiguriert, den Schutzeinsatz 10 aufzunehmen und die über den Schutzeinsatz 10 auf den Aufnahmerahmen 102 wirkenden Kräfte in eine Rumpfstruktur eines Flugzeugs einzuleiten. Der Aufnahmerahmen 102 weist eine Aufnahme 104 für den Schutzeinsatz auf, und eine Vielzahl von Verbindungspunkten 106 zur Befestigung an Tragelementen der Rumpfstruktur.

Der Begriff "Schutzsystem" bezieht sich auf eine Maßnahme zum Schutz des Rumpfes bei Tailstrikes. Die Schutzmaßnahme ist zum Beispiel als System ausgelegt, bei dem die Komponenten austauschbar gestaltet sind.

Der Begriff "Aufnahmerahmen" bezieht sich auf eine Haltevorrichtung für den Schutzeinsatz. Beispielsweise ist die Haltevorrichtung als umlaufender Rahmen ausgebildet.

In einem anderen Beispiel ist die Haltevorrichtung als teilweise umlaufender Rahmen ausgebildet.

Der Aufnahmerahmen 102 weist beispielsweise eine Vielzahl von Verbindungslaschen zur Befestigung an Rahmen und Stringern auf.

Der Aufnahmerahmen 102 dient dazu, die Kraft möglichst verteilt und gleichmäßig in den Rumpf einleiten zu können.

Gemäß einem Aspekt wird eine definierte Schnittstelle für eine Tailstrike-Schutzmaßnahme zur Verfügung gestellt. Der Aufnahmerahmen 102 bildet eine vorbestimmte Anbindung des absorbierenden Schutzelements an den Flugzeugrumpf.

Der Schutzeinsatz ist in einer Größe ausgebildet, sodass die möglichen Aufprallorte am Heck mit abgedeckt sind.

In einem Beispiel ist vorgesehen, dass der Schutzeinsatz in den Aufnahmerahmen 102 nur in einer vorbestimmten Einbaurichtung eingesetzt werden kann, die auf die zu erwartende Wirkrichtung des Tailstrikes ausgelegt ist.

In Fig. 3 ist das Schutzsystem 100 im Zusammenhang mit einer schematisch angedeuteten Rumpfkonstruktion mit einer Außenhaut 110 und einer dahinter befindlichen Tragstruktur 112 des Rumpfes gezeigt. Außerdem ist zum besseren Verständnis eine Start-/Landebahn 114 angedeutet. Bei einem Kontakt des Schutzeinsatzes 10 während zum Beispiel eines Tailstrikes wirken verschiedene Kräfte. Der Kontakt, bzw. Aufprall ist mit einem breiten Pfeil 116 angedeutet. Ein erster Pfeil 118 zeigt die nach unten wirkende Schwerkraft des Flugzeugs; ein zweiter Pfeil 120 zeigt die Flugrichtung an und ein dritter Pfeil 122 die Reibungskraft an der Kontaktfläche.

In einer nicht im Detail gezeigten Option des Schutzsystems 100 ist der Schutzeinsatz 10 bei montiertem Aufnahmerahmen 102 öffenbar gehalten ist. Der Aufnahmerahmen 102 ist ausgebildet, bei einem geöffneten oder demontierten Schutzeinsatz 10 für Inspektions- Wartungs- und/oder Reparaturzwecke eine Zugangsöffnung zum Rumpfinneren zu bilden.

Der Begriff "öffenbar gehalten" bezieht sich auf die Möglichkeit, den Schutzeinsatz 10 zu öffnen und zu schließen. Ein Beispiel ist ein beweglich gehaltener Schutzeinsatz 10. Ein weiteres Beispiel ist ein lösbar gehaltener Schutzeinsatz. Lösbar bedeutet, den montierten Schutzeinsatz 10 wieder ausbauen und anschließend wieder einbauen zu können.

Der Schutzeinsatz 10 ist zum Beispiel Teil eines Deckels oder einer Wartungsklappe, sodass keine tatsächliche Demontage erforderlich ist.

In einem anderen Beispiel ist der Schutzeinsatz 10 zum Öffnen lösbar gehalten, also abnehmbar. sodass eine vorrübergehende Demontage erfolgt.

Der Schutzeinsatz 10 ist bei montiertem, d.h. befestigten Aufnahmerahmen 102 demontierbar. Nach einem Lösen kann der Schutzeinsatz 10 wieder befestigt werden. Der Schutzeinsatz 10 ist bei montiertem Aufnahmerahmen 102 also re-montierbar.

Der Begriff "Zugangsöffnung" bezieht sich auf eine Öffnung, die ausgelegt ist, dass eine Person in den Rumpfbereich gelangen kann. Beispielsweise ist die Zugangsöffnung auch dafür ausgelegt, dass durch die Öffnung Material und Werkzeug ein- und ausgebracht werden kann.

Der Schutzeinsatz 10 bildet ein bi-funktionales Bauteil. Zum einen dient er als austauschbares Bauteil, das für eine optimale Schutzwirkung ausgelegt ist und bei Verschleiß auswechselbar ist. Zum anderen dient er als öffenbarer Verschluss für einen Inspektionszugang.

Es wird also eine Integration des Schutzeinsatzes 10, d.h. die Funktion eines Schutzpanels in eine Öffnungs-Wartungsklappe vorgeschlagen. Die Öffnungs-Wartungsklappe kann auch als "Manhole" bezeichnet werden.

Der Öffnungsrand ist für die Einleitung der Kräfte in die Rumpfstruktur ausgelegt.

Der Schutzeinsatz 10 ermöglicht die Integration der Funktionen i) Zugang, ii) Schutz und iii) Dämpfung.

Der Schutzeinsatz 10 dient zum Beispiel unter normalen Flugbedingungen als lastabtragendes Panel, zum Beispiel zum Abtragen von Grundlasten und von Kräften im Flugbetrieb. Gleichzeitig kann das Panel bei einem Aufsetzen des Hecks Last aufnehmen und teilweise absorbieren.

Beispielsweise ist der Aufnahmerahmen 102 mit unlösbaren Verbindungen an der Rumpfstruktur gehalten, wie zum Beispiel Nieten. Der Schutzeinsatz 10 ist mit lösbaren Verbindungen an dem Aufnahmerahmen 102 gehalten.

Die Demontierbarkeit ermöglicht eine zweite Funktion: Durch ein Demontieren des Schutzeinsatzes 10 kann vorrübergehend, zum Beispiel für Wartungs- und Reparaturzwecke eine Zugangsöffnung des Heckbereichs zur Verfügung gestellt werden.

Die Demontierbarkeit stellt eine Austauschbarkeit des Schutzes zur Verfügung. Beispielsweise kann der Schutzeinsatz 10 in regelmäßigen Intervallen oder auch nach Abhängigkeit der Häufigkeit oder Beanspruchung eines Einsatzes ausgetauscht werden.

In einem Beispiel ist vorgesehen, dass sich der Schutzeinsatz 10 auch bei einer plastischen Deformation des Absorptionskörpers 14 lösen und demontieren lässt, um den Zugang über die Öffnung zu ermöglichen, beispielsweise um die Wasserstofftanks für Inspektionszwecke zu erreichen.

Das Schutzsystem 100 wird in einem Beispiel zwischen zwei Spanten eingefügt. In einem anderen Beispiel ist die Länge des Schutzsystems 100 in eingebautem Zustand größer als der lichte Abstand zwischen zwei Spanten. Daher wird eine Unterbrechung in die Spanten eingesetzt, um einen Einbau des Schutzsystems 100 zu ermöglichen. Die Unterbrechung bildet eine Art Rahmen zum Umleiten der ringförmig wirkenden Kräfte in dem unterbrochenen Spant.

Es wird eine Schutzmaßnahme für Tailstrikes vorgeschlagen, die sich einfach in bestehende Rumpfkonstruktionen integrieren lässt und zudem mit relativ geringem konstruktiven Aufwand umsetzbar ist. Ein weiterer Vorteil ist das geringe zusätzliche Gewicht. Dies ist vor allem bei zukünftigen Antrieben von Bedeutung, wenn zum Beispiel Brennstoffzellen oder andere Antriebe sowie Wasserstofftanks an Bord vorgesehen sind, die ein höheres Bauteilgewicht aufweisen als bisherige Antriebe und übliche Kerosintanks. Die vorgeschlagene Schutzmaßnahme für Tailstrikes tragen zur Gewichtsminimierung der Rumpfkonstruktion bei.

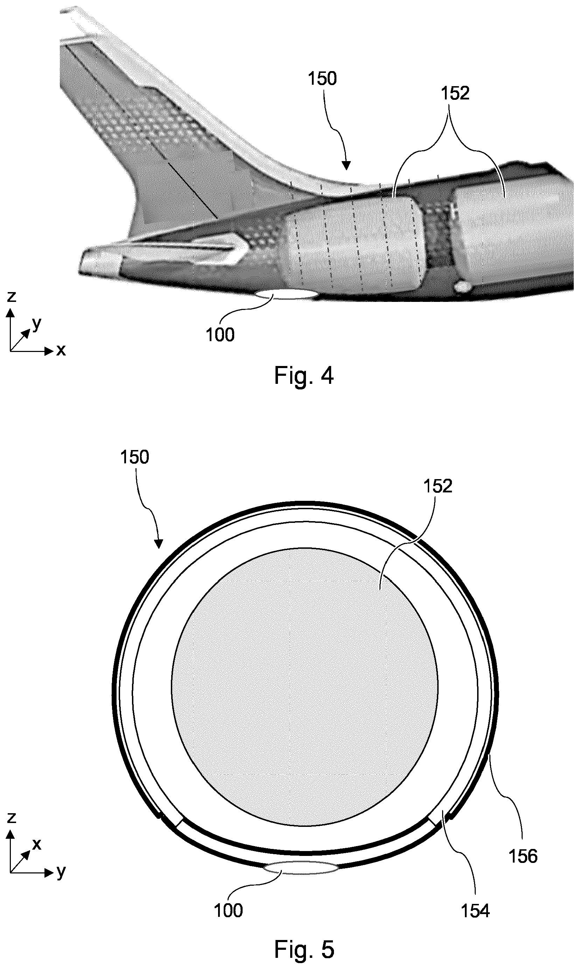

Fig. 4 zeigt ein Beispiel des Schutzsystems 100 an einem Flugzeugheck 150 in einer Seitenansicht. Das Flugzeug ist beispielhaft als Flugzeug mit Wasserstofftanks 152 gezeigt. Das Schutzsystem ist im hinteren Bereich des Hecks auf der Unterseite angeordnet.

Fig. 5 zeigt das Beispiel des Schutzsystems 100 aus Fig. 3 in einem Vertikalschnitt durch das Flugzeugheck 150. Das Flugzeug weist eine schematisch dargestellte Rumpfkonstruktion 154 auf, die zum Beispiel als Rahmen umlaufende Stringer und quer dazu in Längsrichtung verlaufende Spanten umfasst (nicht im Detail gezeigt). Die Rumpfkonstruktion 154 ist mit einer Außenhaut 156 verkleidet.

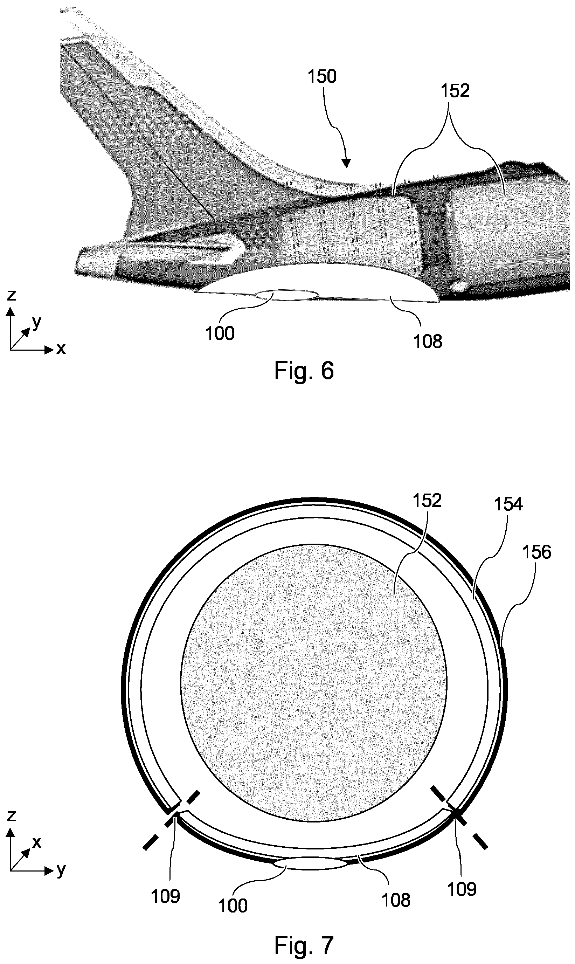

Fig. 6 zeigt ein weiteres Beispiel des Schutzsystems 100 an einem weiteren Beispiel des Flugzeughecks 150 in einer Seitenansicht.

Als Option ist in Fig. 6 und Fig. 7 gezeigt, dass der Aufnahmerahmen 102 des Schutzsystems 100 in einem Rumpfpanel vorgesehen ist, das als abnehmbares strukturelles Panel 108 ausgebildet ist, um einen Ein- und Ausbau von größeren Komponenten umfassend Wasserstofftanks, Segmente von Wasserstofftanks und Systeme und Komponenten von Systemen für Wasserstofftanks und Wasserstoffantrieb innerhalb des Rumpfs zu ermöglichen.

Das abnehmbare strukturelle Panel 108 ist zum Beispiel über definierte Schnittstellen 109 mit der übrigen Rumpfkonstruktion verbunden.

Fig. 7 zeigt das Beispiel des Schutzsystems aus Fig. 5 in einem Vertikalschnitt durch das Flugzeugheck.

Der Begriff "Rumpfpanel" bezieht sich auf ein plattenartiges Bauteil, das im Rumpf eingesetzt wird. Das Rumpfpanel kann eine gekrümmte Form aufweisen. In seiner äußeren Form kann es an den Verlauf der tragenden Strukturbauteile eines Rumpfes, d.h. Spanten und Stringer, angepasst sein. Das Rumpfpanel weist eine tragende Struktur auf, zum Beispiel ähnlich wie die sich anschließenden übrigen Rumpfbereiche oder Rumpfsegmente. Das Rumpfpanel kann auch eine Außenhaut aufweisen.

Der Begriff "strukturelles Panel" bezieht sich auf die tragende Eigenschaft des Panels. Das Rumpfpanel ist zum Beispiel Teil der Primärstruktur des Flugzeugs.

In einer Variante ist vorgesehen, dass der Schutzeinsatz in eine Rumpfschale integriert ist, z.B. in Kombination mit der Wartungsklappenfunktion. Zum Ein- und Ausbauen größerer Strukturen im Inneren des Rumpfes, wie zum Beispiel Tanks, weist der Rumpf jedoch kein großes abnehmbares Panel auf, sondern kann über einen sogenannten Orbital Joint geöffnet werden. Der Orbital Joint ist zum Beispiel eine Art umlaufende lösbare Verbindung zwischen zwei Rumpfsegmenten.

Als Option ist vorgesehen, dass das Schutzsystem so ausgebildet ist, dass der Schutzeinsatz austauschbar ist und von einem Flugzeug in ein anderes Flugzeug eingesetzt werden kann. Dies bedingt eine hohe Genauigkeit und ein geringes Spiel bei den Befestigungsanschlüssen, zum Beispiel Bohrungen. Diese sogenannte "Interchangeability" bietet Vorteile bei Wartung, Service und Reparaturen.

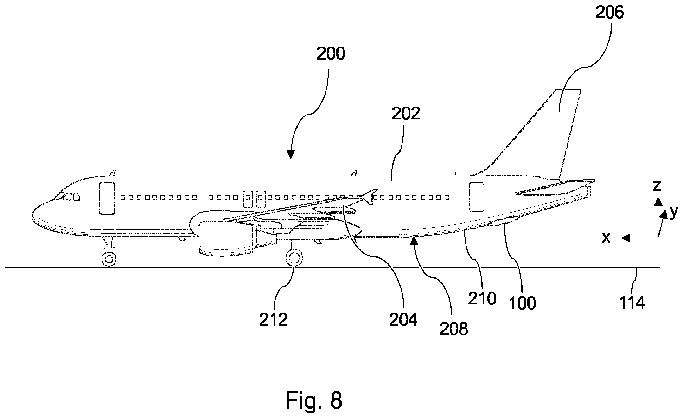

Fig. 8 zeigt schematisch ein Beispiel eines Flugzeugs 200 in einer Seitenansicht im Zusammenhang mit einer Start-/Landebahn. Das Flugzeug 200 weist einen Flugzeugrumpf 202, an dem Flugzeugrumpf befestigte Flügel 204 und ein an dem Flugzeugrumpf befestigtes Leitwerk 206 auf. Der Flugzeugrumpf weist einen Heckbereich 208 auf. An einer Unterseite 210 des Heckbereichs ist ein Beispiel des Schutzsystems 100 nach einem der vorhergehenden Beispiele vorgesehen.

Das Flugzeug ist beispielhaft mit einem ausgefahrenen Fahrwerk 212 gezeigt.

Das Schutzsystem 100 eignet sich beispielsweise für Flugzeuge, die mit Wasserstofftanks im Heckbereich ausgebildet sind. Die dämpfende Wirkung des Schutzeinsatzes bedeutet unter anderem eine Verringerung der auf die Tankhalterungen wirkenden Kräfte.

In einer Option ist eine Rumpfstruktur eines Flugzeugs vorgesehen. Die Rumpfstruktur weist eine Vielzahl von Rahmen und eine Vielzahl von Stringern auf. Die Rahmen und Stringer sind miteinander verbunden und zum Halten einer Außenhaut ausgebildet, um einen Rumpfinnenbereich zu umschließen. Die Rumpfstruktur weist einen Heckbereich auf. An einer Unterseite des Heckbereichs der Rumpfstruktur ist ein Schutzsystem nach einem der oberhalb genannten Beispiele vorgesehen. Das Schutzsystem leitet eine Aufprallkraft bei einem Heckaufprall in die Rumpfstruktur ein. Die Rahmen können auch als Spanten bezeichnet werden.

In einer praktischen Anwendung ist vorgesehen, dass Maßnahmen ergriffen werden, um einen Tailstrike zu verhindern, zum Beispiel durch den Piloten oder durch Steuerungsmaßnahmen, um zu vermeiden, dass es zu einem Tailstrike kommt. Beispielsweise können Steuerungseingriffe vorgesehen sein, die verhindern, dass das Flugzeug einen zu großen Winkel im Verhältnis zu einer Start-/Landebahn hat, wenn es zum Beispiel startet, landet oder durchstartet.

In einer Option ist ein Schutzeinsatz nach einem der vorhergehenden Beispiele oder ein Schutzsystem nach einem der vorhergehenden Beispiele an einer Unterseite eines Flugzeugs vorgesehen.

Falls es doch zu einem unerwünschten Kontakt des Hecks mit der Start-/Landebahn, d.h. einem Tailstrike kommt, sollte also trotz der anderen Maßnahmen ein Aufsetzen des Heckbereichs des Flugzeugs auf einer Landebahn während eines Start- oder Landevorgangs erfolgen, kann ein elastisches und/oder plastisches Verformen wenigstens eines Teils des Absorptionskörpers stattfinden, und ein Weiterleiten der gedämpften Druckkraft an den Flugzeugrumpf.

In einer weiteren Option ist eine Verwendung eines Schutzeinsatzes für einen Heckaufprall eines Flugzeugs vorgesehen. Der Schutzeinsatz weist ein außenliegendes Schutzpanel für einen druckbelasteten Schleifkontakt mit einer Landebahn und einen das Schutzpanel stützenden Absorptionskörper auf. Das Schutzpanel überträgt eine bei dem Heckaufprall einwirkende Druckkraft an den Absorptionskörper. Der Absorptionskörper ist zur Absorption der Druckkraft kraftdämpfend ausgeführt und umfasst einen Absorptionseinsatz, der eine Materialstruktur mit einer Vielzahl von Hohlräumen aufweist, wobei durch elastische und/oder plastische Verformung der Materialstruktur wenigstens ein Teil der Druckkraft absorbierbar ist. Die Materialstruktur ist ausgebildet als wenigstens aus der Gruppe umfassend: Schaumstruktur, Gitterstruktur und schaumartiges Gewebe.

In einer weiteren Option ist eine Verwendung eines Schutzeinsatzes für einen Heckaufprall eines Flugzeugs nach einem der vorhergehenden Beispiele vorgesehen.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Schutzeinsatz (10) für einen Heckbereich eines Flugzeugs, der Schutzeinsatz aufweisend:
- ein Schutzpanel (12);
- einen das Schutzpanel stützenden Absorptionskörper (14); und
- eine den Absorptionskörper haltende Kraftübertragungsvorrichtung (16);
wobei das Schutzpanel für einen druckbelasteten Schleifkontakt mit einer Lande-/Startbahn bei einem Heckaufprall ausgebildet ist; und wobei das Schutzpanel eine bei dem Heckaufprall einwirkende Druckkraft an den Absorptionskörper überträgt;
wobei der Absorptionskörper zur Absorption der Druckkraft kraftdämpfend ausgeführt ist, wobei ein Teil der Energie aufgrund der wirkenden Druckkraft absorbierbar in eine elastische und/oder plastische Verformung wenigstens eines Teils des Absorptionskörpers umwandelbar ist; und
wobei die Kraftübertragungsvorrichtung zum Halten des Schutzeinsatzes an einer Unterseite eines Heckbereichs eines Flugzeugs ausgebildet ist und eine Vielzahl von Befestigungsbereichen (18) aufweist.

2. Schutzeinsatz nach Anspruch 1, wobei der Absorptionskörper einen Absorptionseinsatz (20) umfasst, der eine Materialstruktur mit einer Vielzahl von Hohlräumen aufweist, wobei durch elastische und/oder plastische Verformung der Materialstruktur wenigstens ein Teil der Energie aufgrund der wirkenden Druckkraft absorbierbar ist; und
wobei die Materialstruktur ausgebildet ist als wenigstens aus der Gruppe umfassend:
- Schaumstruktur;
- Gitterstruktur; und
- schaumartiges Gewebe.

3. Schutzeinsatz nach Anspruch 1 oder 2, wobei der Absorptionskörper kissenartig ausgebildet ist, und eine Hülle (24) aufweist, in der eine Füllung (26) vorgesehen ist;
wobei die Hülle an der Kraftübertragungsvorrichtung gehalten ist und eine erste Seite (28) bildet, an der das Schutzpanel anliegt, und eine von der ersten Seite abgewandte zweite Seite (30); und
wobei die Füllung ausgelegt ist, eine durch das Schutzpanel auf der ersten Seite übertragende Druckkraft auf die zweite Seite der Hülle zu übertragen, so dass die Kraft über die zweite Seite der Hülle als Zugkraft an die Kraftübertragungsvorrichtung übertragbar ist.

4. Schutzeinsatz nach Anspruch 1, 2 oder 3, wobei die Füllung als Absorptionsfüllung (32) ausgebildet ist und durch eine elastische und/oder plastische Verformung der Absorptionsfüllung wenigstens ein Teil der Energie aufgrund der wirkenden Druckkraft absorbierbar ist.

5. Schutzeinsatz nach Anspruch 4, wobei die Absorptionsfüllung als Absorptionseinsatz ausgebildet ist, der eine Materialstruktur mit einer Vielzahl von Hohlräumen aufweist, wobei durch eine elastische und/oder plastische Verformung der Materialstruktur wenigstens ein Teil der Energie aufgrund der wirkenden Druckkraft absorbierbar ist, und wobei die Materialstruktur ausgebildet ist als wenigstens aus der Gruppe umfassend: Schaumstruktur, Gitterstruktur und schaumartiges Gewebe.

6. Schutzeinsatz nach einem der vorhergehenden Ansprüche, wobei der Absorptionskörper in vertikaler Richtung eine bauchige Querschnittsform hat; und
wobei der Absorptionskörper in horizontaler Richtung eine gerundete Form hat.

7. Schutzeinsatz nach einem der vorhergehenden Ansprüche, wobei das Schutzpanel aus einem Kompositwerkstoff besteht, der eine Matrix und in der Matrix eingebettete Verstärkungsfasern aufweist, wobei wenigstens ein Teil der Verstärkungsfasern aus S-Glas besteht.

8. Schutzeinsatz nach einem der vorhergehenden Ansprüche, wobei der Schutzeinsatz eine Wärmeisolierung (34) aufweist, mit der ein Wärmeeintrag von dem außenliegenden Schutzpanel in Richtung eines Rumpfinnenbereichs verringert wird.

9. Ein Schutzsystem (100) für einen Heckbereich eines Flugzeugs, das Schutzsystem aufweisend:
- einen Schutzeinsatz (10) nach einem der vorhergehenden Ansprüche; und
- einen Aufnahmerahmen (102);
wobei der Aufnahmerahmen konfiguriert ist, den Schutzeinsatz aufzunehmen und die über den Schutzeinsatz auf den Aufnahmerahmen wirkenden Kräfte in eine Rumpfstruktur eines Flugzeugs einzuleiten; und
wobei der Aufnahmerahmen eine Aufnahme (104) für den Schutzeinsatz aufweist und eine Vielzahl von Verbindungspunkten (106) zur Befestigung an Tragelementen der Rumpfstruktur.

10. Schutzsystem nach Anspruch 9, wobei der Schutzeinsatz bei montiertem Aufnahmerahmen öffenbar gehalten ist; und
wobei der Aufnahmerahmen ausgebildet ist, bei einem geöffneten oder demontierten Schutzeinsatz für Inspektions- Wartungs- und/oder Reparaturzwecke eine Zugangsöffnung zum Rumpfinneren zu bilden.

11. Schutzsystem nach Anspruch 9 oder 10, wobei der Aufnahmerahmen in einem Rumpfpanel vorgesehen ist, das als abnehmbares strukturelles Panel (108) ausgebildet ist, um einen Ein- und Ausbau von größeren Komponenten umfassend Wasserstofftanks, Segmente von Wasserstofftanks und Systeme und Komponente von Systemen für Wasserstofftanks und Wasserstoffantrieb innerhalb des Rumpfs zu ermöglichen.

12. Ein Flugzeug (200), aufweisend:
- einen Flugzeugrumpf (202);
- an dem Flugzeugrumpf befestigte Flügel (204); und
- ein an dem Flugzeugrumpf befestigtes Leitwerk (206);
wobei der Flugzeugrumpf einen Heckbereich (208) aufweist; und
wobei an einer Unterseite (210) des Heckbereichs ein Schutzsystem (100) nach einem der Ansprüche 9 bis 11 vorgesehen ist.
